# EUROPÄISCHE PATENTSCHRIFT

(11) **EP 0 997 253 B1**
(45) Veröffentlichungstag und Bekanntmachung des Hinweises auf die Patenterteilung: **09.07.2003**
(21) Anmeldenummer: 99119117.2
(22) Anmeldetag: 04.10.1999
(51) Int. Cl.: B29C 33/56, B29C 33/38, B29C 49/48

(54) **Formwerkzeug zum Extrusionsblasen von Kunststoffen, wie PETG, PVC oder PP**
Mould for extrusion blow moulding of plastics, such as PET, PVC or polypropylene
Moule pour extrusion-soufflage de matière plastique telle que PET, PVC ou polypropylène

(30) Priorität: 02.10.1998 DE 19845544
(43) Veröffentlichungstag der Anmeldung: 03.05.2000
(73) Patentinhaber: Werkzeugbau Leiss GmbH, 96337 Ludwigsstadt (DE)
(72) Erfinder: Leiss, Fritz, 96337 Ludwigsstadt (DE)
(74) Vertreter: Reinhard - Skuhra - Weise & Partner

(56) Entgegenhaltungen:
- EP-A- 0 505 738
- EP-A- 0 742 094
- PATENT ABSTRACTS OF JAPAN vol. 016, no. 339 (M-1284), 22. Juli 1992 (1992-07-22) & JP 04 101813 A (ASAHI CHEM IND CO LTD), 3. April 1992 (1992-04-03)

## Beschreibung

Die Erfindung betrifft ein Formwerkzeug mit zwei trennbaren Werkzeughälften, die eine Formausnehmung zum Extrusionsblasen von Kunststoffen, wie PETG, PVC oder PP, insbesondere zwecks Herstellung von Verpackungsprodukten, wie Flaschen und dergleichen, bilden, wobei für den Kunststoff eine diskontinuierliche Zuführung als Schlauch im plastischen Zustand in das geöffnete Formwerkzeug vorgesehen ist und der Kunststoff nach Schließen des Formwerkzeugs als formextrudierbarer Schlauchabschnitt in dem Formbereich verbleibt.

In der EP 0 742 094 ist bereits ein Formwerkzeug zum Extrusionsblasen von Kunststoffflaschen mit zwei Werkzeugkörperhälften aus einem metallischen Formwerkstoff hoher Wärmeleitfähigkeit offenbart, bei denen im Anlagebereich eine metallische Materialschicht hoher Verschleißfestigkeit durch Sprengplattierung aufgebracht ist. Zum Abtrennen von Formgraten, die nach Durchführung der Extrudierung an einem Bodenabschnitt der Flasche vorhanden sind, ist eine Schneidkante im inneren Bodenabschnitt vorgesehen, die nicht in der durch Sprengplattierung aufgebrachten Materialschicht gebildet sind.

Das Extrusionsblasformen ist besonders zur diskontinuierlichen Herstellung leichter und preiswerter Hohlkörper aus Kunststoffen, die als Einwegverpackungen für flüssige, pastenförmige und feste Füllgüter Verwendung finden, bekannt. Damit können Behälter mit einem Fassungsvermögen von wenigen Millilitern bis zu mehreren tausend Litern produziert werden. Die Herstellung erfolgt dabei so, daß mittels eines Extruders und einer entsprechenden Ringdüse ein Schlauch hergestellt wird, der noch im plastischen Zustand in ein geöffnetes Formwerkzeug eingebracht und abgeschnitten wird. Nach dem Schließen des Formwerkzeugs wird der außerhalb des Formbereichs liegende Schlauch an sogenannten Schneidkanten abgequetscht. Dabei kommt es zu einer abdichtenden Verschweißung des Schlauches im Bereich der Form, und durch eingeblasene Druckluft wird dann der im Formhohlraum verbleibende Schlauch aufgeweitet, bis er an allen Stellen die Formwand berührt. Dabei wird die notwendige Druckluft über einen Dorn vorzugsweise von oben oder auch von unten oder seitlich zugeführt. Nach dem Abkühlen kann dem geöffneten Werkzeug dann der hergestellte Hohlkörper entnommen werden.

Das Material, aus dem die Formwerkzeuge zum Extrusionsblasen hergestellt sind, wird abhängig von dem eingesetzten Extrusionsmaterial gewählt. Dabei ist es bekannt, beispielsweise für die Verarbeitung von PE (Poyäthylen) Formwerkzeuge einzusetzen, die vollständig aus Aluminium bestehen. Der Werkstoff Aluminium hat die günstige Eigenschaft, daß er über eine hohe und vergleichsweise bessere Wärmeleitfähigkeit als Stahl verfügt. Hierdurch ist vorteilhaft die Ausbringung aus Aluminiumwerkzeugen beim Einsatz von PFE auch vergleichsweise höher als bei einem Formwerkzeug aus Stahl. Nachteilig an dem Werkstoff Aluminium ist jedoch dessen Festigkeit. Insbesondere für die Verarbeitung von harten Kunststoffen, wie beispielsweise PETG (Polyäthylenterephtalat), PVC (Polyvinylchlorid) oder PP (Polypropylen), ist ein Formwerkzeug aus reinem Aluminium mangels Verschleißfestigkeit nicht geeignet.

Für Extrusionsmaterial, wie beispielsweise PETG, PVC oder PP ist es daher nötig, daß die Formwerkzeuge im sogenannten Schneidkantenbereich gegenüber Formwerkzeugen für PE härter ausgebildet sind. Insbesondere bei stark ovalen Flaschen, die ein weites Überquetschen eines Vorformlings im Formwerkzeug erforderlich macht, beispielsweise bei Grifflaschen oder ähnlichen Produkten, ist es daher üblich, entweder das Formwerkzeug insgesamt aus Stahl oder aus Aluminium mit im Schneidkantenbereich separat befestigten Stahlleisten als Quetschteile auszubilden. Nachteilig ist dabei jedoch für die Verarbeitung von PVC, PETG und PP, daß die Ausbringleistung des Blaswerkzeugs gering ist, daß das Blaswerkzeug nur eine niedrige Standzeit hat, daß höhere Formengewichte und dadurch auch ein höherer Verschleiß in den Extrusionsblasmaschinen auftritt. Schließlich gestaltet sich bei derartigen Extrusionsblaswerkzeugen die Reparatur auch schwieriger.

Der Erfindung liegt die Aufgabe zugrunde, ein Formwerkzeug zum Extrusionsblasen der eingangs genannten Gattung verfügbar zu machen, das im Vergleich zu einem Blaswerkzeug aus Stahl eine erhöhte Schußzahl und eine höhere Standzeit des Formwerkzeug ermöglicht.

Erfindungsgemäß wird diese Aufgabe durch im Patentanspruch 1 genannten Merkmale gelöst. Bevorzugte Merkmale, die die Erfindung vorteilhaft weiterbilden, sind den nachgeordneten Patentansprüchen zu entnehmen.

Aufgrund des Einsatzes von sprengplattierten Material bei der Herstellung von Blaswerkzeugen beziehungsweise Formwerkzeugen zum Extrusionsblasen entfällt vorteilhaft das Fertigen von Teilpartien komplett aus Stahl. Es müssen keine Stahlleisten auf Aluminiumblaswerkzeuge befestigt werden, und die Kühlung kann aufgrund der nicht vorhandenen Aufsatzteile aus Stahl optimal eingebracht werden. Die Ausbringleistung bzw. Schußzahl des Formwerkzeugs ist dadurch vergleichsweise höher als bei einem Werkzeug komplett aus Stahl, und das erfindungsgemäße Formwerkzeug hat auch eine vergleichsweise höhere Standzeit. Günstig ist weiterhin das geringere Formgewicht, was zu einem geringeren Verschleiß in den Extrusionsmaschinen beiträgt. Auch die Reparaturmöglichkeit der Extrusionsblaswerkzeuge ist vergleichsweise günstiger.

Gemäß der erfindungsgemäßen Konzeption besteht demgemäß das Formwerkzeug zum Extrusionsblasen von Kunststoffen, wie PETG, PVC oder PP, insbesondere zwecks Herstellung von Verpackungsprodukten wie Flaschen und dergleichen, aus zwei Werkzeugkörperhälften, die einen metallischen Formenwerkstoff hoher Wärmeleitfähigkeit aufweisen, wobei bei jeder Werkzeugkörperhälfte mindestens teilweise in der Umgebung der Form der Anlagebereich zur komplementären Werkzeugkörperhälfte eine durch Sprengplattierung aufgebrachte metallische Materialschicht hoher Verschleißfestigkeit aufweist.

Die Dicke der aufgebrachten metallischen Materialschicht ist je nach Anwendung variabel auszulegen und beträgt vorzugsweise wenigstens zwei Millimeter, und der Werkzeugkörper besteht vorzugsweise aus Aluminium, während die metallische Materialschicht bevorzugt mit Stahl gebildet ist.

Gemäß der Erfindung weist jede Formwerkzeughälfte im Randbereich der Formausnehmung Schneidkanten auf, welche je nach Notwendigkeit in ihrer Breite festgelegt werden, vorzugsweise etwa 0,3 mm breit, und bevorzugt im Quetschbereich der Formwerkzeughälfte vorgesehen sind.

Gemäß einer weiteren Ausgestaltung der Erfindung ist vorteilhaft abhängig von Konstruktion der Form und der Produktgeometrie vorgesehen, daß jeder Anlagebereich Kühlbohrungen besitzt, die sich ohne zusätzliche Dichtung von der durch Sprengplattierung aufgebrachten Materialschicht in die Werkzeugkörperhälfte erstrecken. Hierdurch entfallen vorteilhaft die bisher üblichen Abdichtungen wie O-Ringe oder dergleichen, die bisher zwischen metallischen Formwerkzeugkörper und einer darauf montierten Stahlplatte erforderlich waren.

Die Formwerkzeuge zum Extrusionsblasen sind, abhängig von dem herzustellenden Hohlverpackungsprodukt, mehrteilig vorzugsweise zwei- oder dreiteilig aufgebaut, wobei die Schneidkanten in dem Bereich der Form angeordnet sind, der nach Einfügen des extrudierten Schlauchs zum Überquetschten vorgesehen ist.

Nachfolgend wird ein Ausführungsbeispiel der Erfindung unter Bezugnahme auf die beigefügten Zeichnungen näher erläutert. Es zeigen:
- Fig. 1: eine Vorderansicht einer erfindungsgemäß ausgebildeten Formwerkzeugkörperhälfte mit einem dreiteiligen Aufbau; und
- Fig. 2: eine Draufsicht auf die in Figur 1 gezeigte Formwerkzeughälfte.

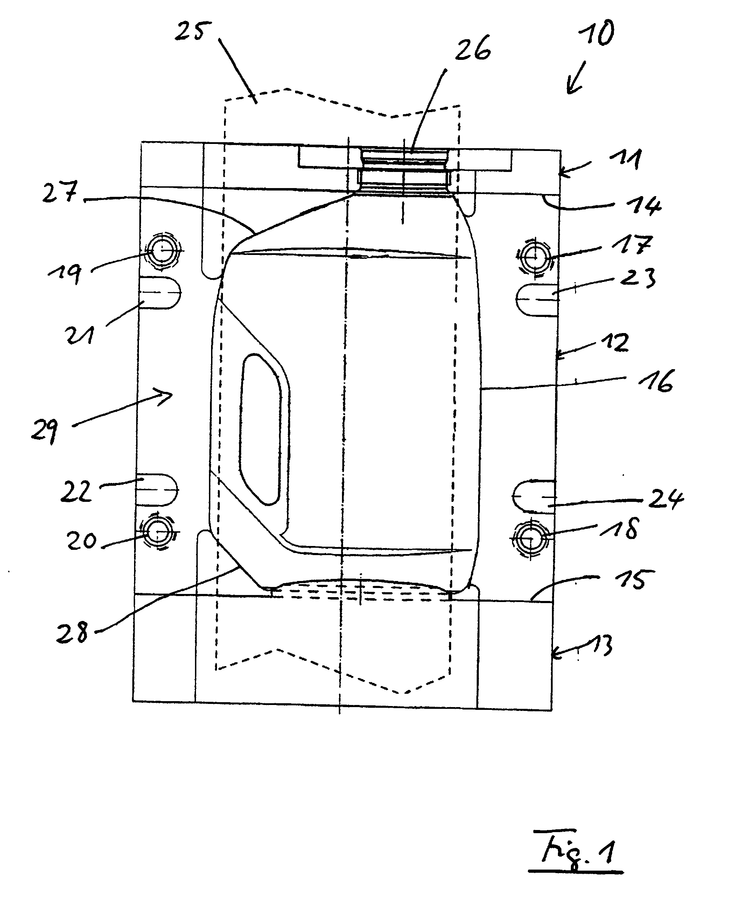

In Figur 1 ist eine Vorderansicht einer Ausgestaltung eines erfindungsgemäßen Formwerkzeugs 10 zum Extrusionsblasen von Kunststoffen wie PETG, PVC oder PP dargestellt, die zur Herstellung einer Grifflasche vorgesehen ist. Das Formwerkzeug 10 besteht aus einem oberen Formteil 11, einem mittleren Formteil 12 und einem unteren Formteil 13. Konstruktionsbedingt können dies auch mehrere Teile sein. Zwischen den Formteilen 11 und 12, 12 und 13 sind Formteilungen 14 und 15 angedeutet.

Der Formwerkzeugkörpermittelteil 12 dient zur Herstellung des Hauptkörpers der Grifflasche und weist hierzu eine passende hälftige Formausnehmung 16 auf. An den Seitenrändern des Formkörpermittelteils 12 befinden sich Gewindelöcher 17 und 18 bzw. 19 und 20 sowie Einspannausnehmungen 21 und 22 bzw. 23 und 24 zur Befestigung der Werkzeugkörperhälfte an einer komplementären spiegelbildlich ausgebildeten, gegenüberliegenden, nicht dargestellten Formwerkzeughälfte.

Gestrichelt angedeutet ist ein vertikal orientierter Hohlschlauch 25 aus Extrusionsmaterial, der beim Schließen der Werkzeugkörperhälfte durch die erwähnte gegenüberliegende Werkzeugkörperhälfte an Schneidkanten 27 und 28, die allgemein nach Bedarf, hier etwa 0,3 mm breit sind, abgequetscht wird. Bei diesem Abquetschen kommt es zu einem abdichtenden Verschweißen des in dem Hohlraum 16 verbleibenden Schlauchabschnitts, der dann über eine Öffnung 26, die die spätere Flaschenöffnung bildet, mit Druckluft zum Blasformen beaufschlagt wird.

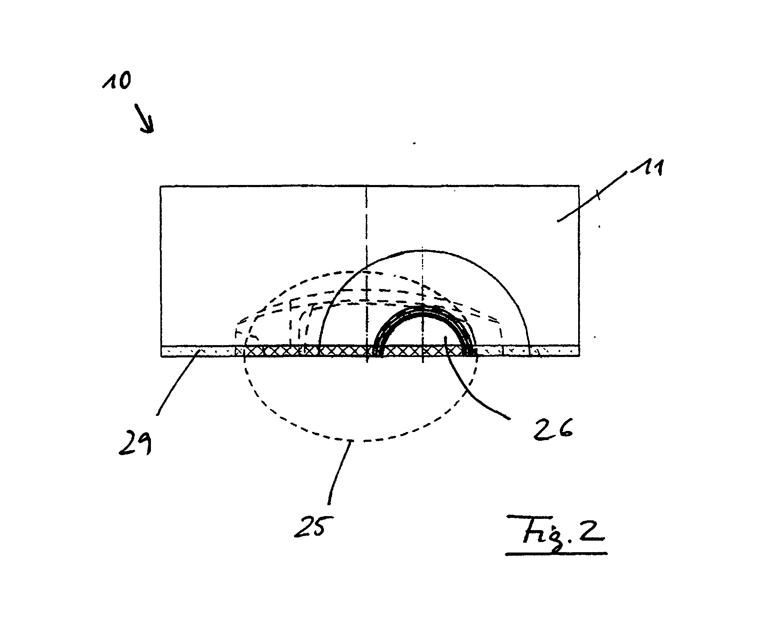

Wie im Zusammenhang mit Figur 2 ersichtlich, bestehen die Werkzeugformteile 11, 12, 13 aus Aluminium, wobei die Form 16 des herzustellenden Hohlprodukt vorzugsweise hälftig ausgenommen ist, während die zur wechselseitigen Anlage bestimmte Trennfläche 29, die in Figur 1 in Draufsicht erkennbar ist, aus einer allgemein nach Bedarf, hier wenigstens 2 mm dicken Stahlschicht besteht, die durch Sprengplattierung aufgebracht ist. Statt Stahl kann auch Titan oder ein ähnlicher harter Werkstoff vorgesehen sein.

## Patentansprüche

1. Formwerkzeug mit zwei trennbaren Werkzeugkörperhälften (11, 13), die eine Formausnehmung (16) zum Extrusionsblasen von Kunststoffen, wie PETG, PVC oder PP, insbesondere zwecks Herstellung von Verpackungsprodukten, wie Flaschen oder dergleichen bilden, wobei für den Kunststoff eine diskontinuierliche Zuführung als Schlauch im plastischen Zustand in das geöffnete Formwerkzeug vorgesehen ist und der Kunststoff nach Schließen des Formwerkzeugs als formextrudierbarer Schlauchabschnitt in dem Formbereich verbleibt,
wobei jede Werkzeugkörperhälfte (11, 13) aus einem metallischen Formenwerkstoff hoher Wärmeleitfähigkeit besteht, wobei bei jeder Werkzeugkörperhälfte (11, 13) in der Umgebung der Formausnehmung (16) der Anlagenbereich zur gegenüberliegenden Werkzeugkörperhälfte wenigstens teilweise eine metallische Materialschicht (29) hoher Verschleißfestigkeit aufweist, die durch Sprengplattierung auf der Werkzeugkörperhälfte (11, 13) aufgebracht ist, und wobei die durch Sprengplattierung aufgebrachte Materialschicht (29) im Randbereich, der Formausnehmung (16) Schneidkanten (27, 28) für das Herstellen des Schlauchabschnitts aufweist.

2. Formwerkzeug nach Anspruch 1,
**dadurch gekennzeichnet,**
**daß** die Schneidkanten (27, 28) wenigstens etwa 0,1-1,5 mm breit sind.

3. Formwerkzeug nach Anspruch 2,
**dadurch gekennzeichnet,**
**daß** die Schneidkanten (27, 28) im Quetschbereich der Formwerkzeugkörperhälfte (11-13) vorgesehen sind.

4. Formwerkzeug nach einem der vorangehenden Ansprüche,
**dadurch gekennzeichnet,**
**daß** die Dicke des sprengplattierten Materials wenigstens 2 mm beträgt.

5. Formwerkzeug nach einem der vorangehenden Ansprüche,
**dadurch gekennzeichnet,**
**daß** der Werkzeugkörper (11-13) aus Aluminium besteht.

6. Formwerkzeug nach einem der vorangehenden Ansprüche,
**dadurch gekennzeichnet,**
**daß** die metallische Materialschicht (29) aus Stahl, Titan oder einem ähnlich harten Werkstoff besteht.

7. Formwerkzeug nach einem der vorangehenden Ansprüche,
**dadurch gekennzeichnet,**
**daß** jeder Anlagebereich Kühlbohrungen aufweist, die sich ohne zusätzliche Dichtungen von der durch Sprengplattierung aufgebrachten Materialschicht (29) in die Werkzeugkörperhälfte (11-13) erstrecken.

8. Formwerkzeug nach einem der vorangehenden Ansprüche,
**dadurch gekennzeichnet,**
**daß** jede Formwerkzeugkörperhälfte zweiteilig aufgebaut ist.

9. Formwerkzeug nach einem der Ansprüche 1-7,
**dadurch gekennzeichnet,**
**daß** jede Formwerkzeugkörperhälfte (11-13) dreiteilig aufgebaut ist.

## Claims

1. Mould comprising two halves (11, 113) of the mould body, which are detachable from each other and present a shaping cavity (16) for extrusion blow moulding of plastics such as PET, PVC or PP, particularly for the purpose of manufacturing packing products such as bottles or the like, a discontinuous supply being provided in the form of a tube in plastic condition into the opened mould for supplying the plastic material and the plastic material remaining as a tube section adapted to be extrusion moulded in the shaping zone after the mould has been closed, wherein each half of the mould body (11, 13) consists of a metal mould material presenting a thermal conductivity, the bearing zone that extends towards the opposite half of the mould in the vicinity of said shaping cavity (16) in each half (11, 13) of the mould body tool presenting, at least partly, a metal material layer (29) of high wear resistance, which is applied on the respective half (11, 13) of the mould body by explosion plating, and wherein said material layer (29) applied by explosion plating presents cutting edges (27, 28) in the marginal zone of said shaping cavity (16) for the production of said tube section.

2. Mould according to Claim 1, **characterised in that** said cutting edges (27, 28) have a width of at least 0.1 to 1.5 mm approximately.

3. Mould according to Claim 2, **characterised in that** said cutting edges (27, 28) are provided in the squeezing zone of the respective half (11 - 13) of the mould body.

4. Mould according to any of the preceding Claims, **characterised in that** the thickness of said material applied by explosion plating amounts to at least 2 mm.

5. Mould according to any of the preceding Claims, **characterised in that** said mould body (11 - 13) consists of aluminium.

6. Mould according to any of the preceding Claims, **characterised in that** said metal material layer (29) consists of steel, titanium or a similar hard material.

7. Mould according to any of the preceding Claims, **characterised in that** each bearing zone presents cooling bores extending, without additional sealing means, from said material layer (29) applied by explosion plating into the respective half (11 - 13) of the mould body.

8. Mould according to any of the preceding Claims, **characterised in that** each half of said mould body has a two-piece structure.

9. Mould according to any of the Claims 1 to 7, **characterised in that** each half (11 - 13) of said mould body has a three-piece structure.

## Revendications

1. Outil de formage comportant deux moitiés de corps d'outil séparables (11, 13), qui définissent un logement de moule (16) pour l'extrusion - soufflage de matières plastiques, comme le PETG, le PVC ou le PP, notamment dans le but d'une fabrication de produits d'emballage tels que des bouteilles ou similaires, dans lequel il est prévu une amenée discontinue de la matière plastique sous forme de boyau à l'état plastique dans l'outil de formage ouvert, et après fermeture de l'outil de formage, la matière plastique reste dans la zone de moulage comme segment de boyau apte au façonnage par extrusion,
dans lequel chaque moitié de corps d'outil (11, 13) est constituée en un matériau de moule métallique de haute conductibilité thermique, pour chaque moitié de corps d'outil (11, 13) dans le voisinage du logement de moulage (16), la zone d'appui pour les moitiés de corps d'outil opposées comporte, au moins en partie, une couche de matériau métallique (29) de haute résistance à l'usure qui est rapportée par placage par explosion sur les moitiés de corps d'outil (11, 13), et dans lequel, dans la zone du bord du logement de moulage (16), la couche de matériau (29) rapportée par placage par explosion présente des arêtes de coupe (27, 28) pour la fabrication du segment de boyau.

2. Outil de formage selon la revendication 1 **caractérisé en ce que** les arêtes de coupe (27, 28) sont larges d'au moins sensiblement 0,1 - 1,5 mm.

3. Outil de formage selon la revendication 2 **caractérisé en ce que** les arêtes de coupe (27, 28) sont prévues dans la zone d'écrasement des moitiés de corps (11, 13) de l'outil de formage.

4. Outil de formage selon l'une quelconque des revendications précédentes, **caractérisé en ce que** l'épaisseur du matériau plaqué par explosion est d'au moins 2 mm.

5. Outil de formage selon l'une quelconque des revendications précédentes, **caractérisé en ce que** le corps de l'outil (11, 13) est constitué en aluminium.

6. Outil de formage selon l'une quelconque des revendications précédentes, **caractérisé en ce que** la couche de matériau métallique (29) est constituée en acier, en titane ou en un autre matériau dur similaire.

7. Outil de formage selon l'une quelconque des revendications précédentes, **caractérisé en ce que** chaque zone d'appui présente des alésages de refroidissement, qui s'étendent dans les moitiés de corps (11, 13) de l'outil, sans garnitures d'étanchéité supplémentaires, à partir de la couche de matériau (29) rapportée par placage par explosion.

8. Outil de formage selon l'une quelconque des revendications précédentes, **caractérisé en ce que** chaque moitié de corps de l'outil de formage est construite en deux parties.

9. Outil de formage selon l'une quelconque des revendications 1 à 7, **caractérisé en ce que** chaque moitié de corps (11, 13) de l'outil de formage est construite en trois parties.
